# EUROPÄISCHE PATENTSCHRIFT

(11) **EP 2 222 564 B1**
(45) Veröffentlichungstag und Bekanntmachung des Hinweises auf die Patenterteilung: **12.02.2014**
(21) Anmeldenummer: 07857875.4
(22) Anmeldetag: 19.12.2007
(51) Int. Cl.: B64F 1/20, F21S 8/00, F21V 29/00, F21K 99/00, F21S 8/02, F21W 111/06, F21Y 101/02

(54) **FLUGFELDBELEUCHTUNGSEINRICHTUNG**
AIRFIELD LIGHTING DEVICE
DISPOSITIF D'ÉCLAIRAGE DE TERRAIN D'AVIATION

(43) Veröffentlichungstag der Anmeldung: 01.09.2010
(73) Patentinhaber: OSRAM GmbH, 80807 München (DE)
(72) Erfinder: LAABS, Holger, 13595 Berlin (DE); SEIDEL, Rainer, 12683 Berlin (DE); FARCHTCHIAN, Nadir, 13629 Berlin (DE)
(86) Internationale Anmeldenummer: PCT/EP2007/064254
(87) Internationale Veröffentlichungsnummer: WO 2009/077010

(56) Entgegenhaltungen:
- WO-A-2007/019733
- CN-A- 101 078 472
- CN-Y- 200 952 670
- JP-A- 2001 266 602
- US-A- 4 729 076
- US-A1- 2005 156 531
- US-A1- 2006 250 800
- US-A1- 2007 086 196
- US-A1- 2007 091 622
- US-A1- 2007 253 202
- US-A1- 2008 116 475

## Beschreibung

Es wird eine Flugfeldbeleuchtungseinrichtung mit zumindest einer lichtemittierenden Diode nach dem Oberbegriff des Anspruchs 1 angegeben.

Für Starts und Landungen von Flugzeugen etwa bei Dunkelheit und bei Nebel verfügen Start- und Landebahnen über eine so genannte Airfield-Beleuchtung, die beispielsweise die seitliche Begrenzung, die Mitte, den Anfang und das Ende der Bahnen sowie auch einzelne Abschnitte markieren kann. Dabei muss eine derartige Beleuchtung den amtlichen Vorschriften genügen und sollte eine hohe Zuverlässigkeit und Lebensdauer aufweisen.

Das Dokument US 2006/250800 A1 offenbart eine Beleuchtungseinrichtung, die ein LED-Modul mit einem Kühlkörper umfasst. Mindestens eine LED ist in einem wärmeleitenden Trägermaterial eingelassen. Das Trägermaterial ist mit einer Wärmeleitplatte verbunden, die ihrerseits Kühlrippen aufweist. Die Wärmeleitplatte ist zur Aufnahme eines Kühlfluids als Hohlraumstruktur ausgebildet.

Ein weiterer wesentlicher Stand der Technik ist durch US 2007/0091622 A1 gegeben.

Zumindest eine Aufgabe von bestimmten Ausführungsformen der vorliegenden Erfindung ist es, eine Flugfeldbeleuchtungseinrichtung mit lichtemittierenden Dioden anzugeben.

Diese Aufgabe wird durch einen Gegenstand mit den Merkmalen des unabhängigen Patentanspruchs 1 gelöst. Vorteilhafte Ausführungsformen und Weiterbildungen des Gegenstands sind in den abhängigen Ansprüchen gekennzeichnet und gehen weiterhin aus der nachfolgenden Beschreibung und den Zeichnungen hervor.

Üblicherweise werden in Flugfeldbeleuchtungseinrichtungen Halogenlampen beziehungsweise Halogen-Reflektorlampen zur Lichterzeugung verwendet. Diese weisen eine hohe Betriebstemperatur von mehreren hundert °C auf und damit eine hohe thermische Verlustleistung auf. Im Vergleich zu Halogenlampen können LEDs eine wesentlich geringere thermische Verlustleistung und gleichzeitig eine höhere Lebensdauer und Zuverlässigkeit aufweisen. Zur Erzielung einer langen Lebensdauer einer LED wie etwa der zumindest einen ersten LED in der hier beschriebenen Flugfeldbeleuchtungseinrichtung ist es jedoch erforderlich, dass die Temperatur in den Licht erzeugenden Schichten der LED dauerhaft unterhalb einer kritischen Grenze gehalten wird, damit keine vorzeitigen Degradationseffekte in der LED auftreten, die die Lebensdauer verkürzen können. Beispielsweise ist die Sperrschichttemperatur in einer LED für einen dauerhaften Betrieb unterhalb einer Temperatur von 125°C und bevorzugt unterhalb einer Temperatur von 90°C zu halten. Während bekannte Kühlkörper in der Größe von Halogen-Reflektorlampen zur effizienten Kühlung zu klein sind und die Ableitung der von der zumindest einen LED im Betrieb erzeugten Wärme über Metallplatinen oder mittels freier Konvektion an das Gehäuse nicht effizient genug ist. kann durch das erste Wärmeleitrohr eine effiziente Wärmeleitung der von der zumindest einen ersten LED im Betrieb erzeuaten Wärme vom ersten Grundkörper auf den ersten Kühlkörper möglich sein.

Die zumindest eine erste LED ist dabei derart auf dem ersten Grundkörper angeordnet, dass die zumindest eine erste LED in thermischem Kontakt mit dem ersten Grundkörper steht. Die im Betrieb der zumindest einen ersten LED erzeugte Wärme kann dabei über eine Kontaktfläche mit dem ersten Grundkörper auf diesen übergehen. Durch den thermischen Kontakt zwischen dem ersten Grundkörper und dem ersten Wärmeleitrohr kann die Wärme weiterhin auf das erste Wärmeleitrohr überaehen. Dabei kann das erste Wärmeleitrohr einen ersten Teilbereich und einen zweiten Teilbereich derart aufweisen, dass Wärme mittels des Wärmeübertragungsmediums vom ersten Teilbereich in den zweiten Teilbereich transportiert werden kann. Besonders bevorzugt sind der erste Teilbereich und der zweite Teilbereich einander gegenüberliegende Seiten oder Enden des Wärmeleitrohrs. Der erste Teilbereich kann dabei in thermischem Kontakt mit dem ersten Grundkörper stehen, während der zweite Teilbereich in thermischem Kontakt mit dem ersten Kühlkörper stehen kann. Das erste Wärmeleitrohr kann weiterhin ein durch eine Außenwandung vollständig umgebenes Innenvolumen aufweisen, in dem das Wärmeübertragungsmedium vorhanden ist.

Der erste Teilbereich kann vorzugsweise an einem ersten Ende des Wärmeleitrohrs angeordnet sein. Das erste Wärmeleitrohr kann insbesondere geeignet sein, dass in dem ersten Teilbereich Wärme, das heißt Wärmeenergie, von der zumindest einen ersten LED auf das Wärmeübertragungsmedium abgegeben wird. Dabei kann das Wärmeübertragungsmedium im ersten Teilbereich zumindest teilweise von einem ersten Zustand in einen zweiten Zustand übergehen, wobei der erste und der zweite Zustand beispielsweise unterschiedliche Aggregatszustände sein können. Insbesondere kann der erste Zustand eine feste und/oder eine flüssige Phase umfassen und der zweite Zustand eine dampfförmige Phase. Das kann insbesondere bedeuten, dass das Wärmeübertragungsmedium im ersten Teilbereich durch Aufnahme von Wärme von der Wärmequelle verdampfen oder sublimieren kann. Dabei kann das Wärmeübertragungsmedium in dem ersten Teilbereich einen ersten Dampfdruck aufweisen. Alternativ oder zusätzlich kann der erste Zustand ebenfalls eine dampfförmige Phase umfassen, wobei dann die Dichte des zweiten Zustands vorzugsweise geringer als die Dichte der dampfförmigen Phase des ersten Zustands sein kann.

Zumindest ein Teil des Wärmeübertragungsmediums, das sich nach Aufnahme von Wärme im ersten Teilbereich im zweiten Zustand befindet, kann sich dann zu dem zweiten Teilbereich, der vorzugsweise an einem zweiten Ende des Wärmeleitrohrs angeordnet ist, bewegen, so etwa beispielsweise durch Konvektionskräfte. Im zweiten Teilbereich kann das Wärmeübertragungsmedium vom zweiten Zustand durch Abgabe von Wärme wieder in den ersten Zustand übergehen, also beispielsweise kondensieren oder resublimieren. Insbesondere kann es auch möglich sein, dass das Wärmeübertragungsmedium im zweiten Teilbereich einen zweiten Dampfdruck aufweist, der niedriger als der erste Dampfdruck ist. Die durch den Übergang des Wärmeübertragungsmediums freigewordene Wärme kann dann vom zweiten Teilbereich an die Umgebung, insbesondere an den ersten Kühlkörper, abgegeben werden. Insbesondere kann das vorweg beschriebene Funktionsprinzip bedingen, dass der erste Teilbereich eine höhere Temperatur aufweist als der zweite Teilbereich.

Das Wärmeübertragungsmedium im ersten Zustand im zweiten Teilbereich kann dann beispielsweise durch Einwirkung einer oder mehrerer Kräfte, etwa durch die Schwerkraft und/oder durch Kapillarkräfte, in den ersten Teilbereich zurücktransportiert werden. Insbesondere können Netzstrukturen, Sinterstrukturen, Rillen oder Rinnen oder Kombinationen daraus, die in dem Innenvolumen oder das Innenvolumen umgebend in dem Wärmeleitrohr angeordnet sind, geeignet sein, das Wärmeübertragungsmedium vom zweiten Teilbereich in den ersten Teilbereich über Kapillarkräfte zu transportieren.

Beispielsweise kann das erste Wärmeleitrohr, das nach dem vorgenannten Prinzip mittels des Wärmeübertragungsmediums Wärme leiten kann, ein Thermosyphon oder besonders bevorzugt ein so genanntes Wärmerohr ("Heatpipe") umfassen oder sein. Ein derartiges, nach dem vorgenannten Prinzip arbeitendes Wärmeleitrohr kann vorteilhaft sein, um Wärme ohne zusätzlichen Energieaufwand auf wirtschaftliche Weise effizient von seinem ersten Teilbereich zu seinem zweiten Teilbereich zu leiten. Insbesondere kann die Flugfeldbeleuchtungseinrichtung als erstes Wärmeleitrohr eine Heatpipe aufweisen. Dieses kann für eine effiziente Wärmeleitung mittels des Wärmeübertragungsmediums dabei eine für den Betrieb erforderliche Einbauorientierung der Flugfeldbeleuchtungseinrichtung in Relation zur Schwerkraftrichtung und/oder zur Erstreckungsrichtung des Flugfelds aufweisen. Insbesondere kann das bedeuten, dass das erste Wärmeleitrohr im derart eingebauten Zustand der Flugfeldbeleuchtungseinrichtung horizontal vom ersten Grundkörper zum ersten Kühlkörper führt.

Das erste Wärmeleitrohr kann eine längliche, stabförmige Form aufweisen. Insbesondere kann das erste Wärmeleitrohr dabei einen kreisrunden Querschnitt senkrecht zu einer Längsachse aufweisen. Der erste und der zweite Teilbereich des ersten Wärmeleitrohrs können dabei in vorteilhafter Weise durch die Endbereiche der stabförmigen Form gebildet sein. Alternativ oder zusätzlich kann das erste Wärmeleitrohr auch einen ellipsenförmigen oder einen n-eckigen Querschnitt aufweisen, wobei n eine ganze Zahl größer oder gleich 3 sein kann. Weiterhin kann das erste Wärmeleitrohr auch mehrere getrennt voneinander ausgebildete Innenvolumina mit dem Wärmeübertragungsmedium aufweisen. Es kann auch möglich sein, das das erste Wärmeleitrohr mehrere Wärmeleitrohre umfasst. die unabhängig voneinander mit dem ersten Grundkörper und dem ersten Kühlkörper im thermischem Kontakt stehen können oder auch in einem gemeinsamen Bauteil integriert sein können, so etwa beispielsweise als zwei der Länge nach verbundene stabförmige Wärmeleitrohre. Darüber hinaus weist das erste Wärmeleitrohr eine zumindest in Teilbereichen gebogene Form auf.

Dass das erste Wärmeleitrohr thermisch an den ersten Grundkörper und an den ersten Kühlkörper angekoppelt ist, kann also insbesondere bedeuten, dass sich der erste Teilbereich des ersten Wärmeleitrohrs in thermischem Kontakt mit dem ersten Grundkörper und damit auch mit der auf dem ersten Grundkörper angeordneten zumindest einen ersten LED befindet und der zweite Teilbereich des ersten Wärmeleitrohrs mit dem ersten Kühlkörper.

Dabei kann ein derartiger thermischer Kontakt beziehungsweise eine thermische Ankopplung durch einen mechanischen Kontakt realisiert sein, beispielsweise über Kontaktflächen oder Kontaktbereiche jeweils am ersten Wärmeleitrohr, dem ersten Grundkörper und dem ersten Kühlkörper. Insbesondere der erste Grundkörper und/oder der erste Kühlkörper können dabei als Kontaktflächen beispielsweise eine Bohrung, Rinne oder Öffnung aufweisen, in die das erste Wärmeleitrohr teilweise hineinragen und/oder in der das erste Wärmeleitrohr teilweise verlaufen kann. Dabei kann weiterhin durch ein Wärme leitendes Verbindungsmedium, beispielsweise eine Wärmeleitpaste, das auf Kontaktflächen oder Kontaktbereichen aufgetragen ist, und/oder eine Lötverbindung mit einem Lot die thermische Ankopplung von Kontaktflächen oder Kontaktbereichen aneinander verbessert werden.

Das erste Wärmeleitrohr kann an den ersten Grundkörper und/oder an den ersten Kühlkörper jeweils mittels einer lösbaren Befestigungsart angeschlossen sein. Eine lösbare Befestigungsart kann dabei insbesondere eine mechanische Befestigungsart wie etwa Schrauben, Stecken, Flanschen, Klemmen oder eine Kombination daraus sein. Weiterhin kann das erste Wärmeleitrohr an den ersten Grundkörper und/oder den ersten Kühlkörper mittels einer nach dem Befestigen schwer lösbaren oder unter Normalbedingungen unlösbaren Befestigungsart wie etwa Löten, Schweißen, Kleben oder einer Kombination daraus angeschlossen sein. Das erste Wärmeleitrohr kann an den ersten Grundkörper und/oder an den ersten Kühlkörper auch mittels einer Kombination von zwei oder mehreren der vorher genannten Befestigungsarten, also einer Kombination aus Stecken, Klemmen, Flanschen, Löten, Schweißen, Kleben und/oder Schrauben angeschlossen sein.

Das Wärmeübertragungsmedium kann bevorzugt Wasser aufweisen. Alternativ oder zusätzlich kann das Wärmeübertragungsmedium Ethan, Propan, Butan, Pentan, Propen, Methylamin, Ammoniak, Methanol, Ethanol, Methylbenzen, Aceton und/oder Kohlendioxid oder eine Mischung oder Kombination daraus aufweisen. Beispielsweise kann das Wärmeübertragungsmedium Wasser und ein Frostschutzmittel, beispielsweise einen Alkohol, aufweisen, so dass das erste Wärmeleitrohr auch unterhalb des Gefrierpunkts von Wasser das Wärmeübertragungsmedium zumindest teilweise in flüssiger Phase aufweisen kann.

Weiterhin kann im Vergleich zum Luftdruck in der Umgebung außerhalb des Innenvolumens des ersten Wärmeleitrohrs im Innenvolumen ein geringerer Druck als der Umgebungsluftdruck herrschen. Alternativ kann in dem Innenvolumen auch ein höherer Druck als der Umgebungsluftdruck herrschen. Durch eine Einstellung des Drucks in dem Innenvolumen kann zusammen mit der Wahl des Wärmeübertragungsmediums und der Wahl der Abmessungen des ersten Wärmeleitrohrs wie etwa Länge, Form und Durchmesser, ein gewünschter Temperaturbereich, in dem das erste Wärmeleitrohr effizient arbeiten kann, eingestellt werden. Insbesondere kann es gerade für Flugfeldbeleuchtungseinrichtungen aufgrund amtlicher Vorgaben erforderlich sein, zuverlässig und dauerhaft in einem Temperaturbereich von-55°C bis +55°C betrieben zu werden.

Das erste Wärmeleitrohr kann weiterhin ein Material mit hoher Wärmeleitfähigkeit aufweisen, insbesondere ein Metall wie etwa Kupfer oder Aluminium. Insbesondere kann auch der erste Grundkörper ein Material mit hoher Wärmeleitfähigkeit aufweisen, insbesondere ein Metall wie etwa Kupfer oder Aluminium. Weiterhin kann der erste Grundkörper beispielsweise auch eine Metallkernplatine wie etwa eine Aluminiumkernplatine aufweisen oder eine solche sein. Dabei kann der erste Grundkörper mechanische und elektrische Kontakte und Kontaktflächen wie etwa eine Montaaefläche oder elektrische Leiterbahnen aufweisen, mittels derer die zumindest eine erste LED mechanisch und elektrisch anschließbar ist.

Weiterhin kann der erste Kühlkörper zumindest einen Teil des Gehäuses bilden, in dem die zumindest eine erste LED auf dem ersten Grundkörper angeordnet ist. Das kann bedeuten, dass der erste Kühlkörper beispielsweise einen Teil einer Gehäusewand bilden kann, die die zumindest eine erste LED auf dem ersten Grundkörper von der Umgebung der Flugfeldbeleuchtungseinrichtung abgrenzt. Dadurch kann eine effiziente Ableitung der Wärme von der zumindest einen LED über den ersten Grundkörper, das erste Wärmeleitrohr und den ersten Kühlkörper an die Umgebung der Flugfeldbeleuchtungseinrichtung gewährleistet werden.

Der erste Kühlkörper ist umlaufend um den ersten Grundkörper ausgebildet und angeordnet. Ein derartiger erster Kühlkörper kann somit Platz sparend um den ersten Grundkörper herum angeordnet sein, so dass eine kompakte Flugfeldbeleuchtungseinrichtung ermöglicht werden kann. Der erste Kühlkörper schliesst den ersten Grundkörper dabei um, wodurch eine gleichförmige, symmetrische Ableitung der Wärme vom ersten Kühlkörper an die Umgebung der Flugfeldbeleuchtungseinrichtung ermöglicht werden kann. Der erste Kühlkörper ist zylinderförmig mit einem kreisförmigen, elliptischen oder drei- oder mehreckigen Querschnitt oder einer Kombination daraus.

Weiterhin kann der erste Kühlkörper ein Material mit einer hohen Wärmeleitfähigkeit wie etwa ein Metall, beispielsweise Kupfer oder Aluminium, aufweisen. Insbesondere kann es vorteilhaft sein, wenn der erste Kühlkörper ein hohes Verhältnis von Oberfläche zu Volumen hat. Diesbezüglich kann der Kühlkörper vorzugsweise Rillen, Kühlrippen, Lamellen und/oder Finnen aufweisen. Dadurch kann beispielsweise eine großflächige und effiziente Wärmeabgabe an die Umgebung ermöglicht werden. Beispielsweise kann der erste Kühlkörper auf einer dem ersten Grundkörper abgewandten Außenfläche umlaufend um den ersten Grundkörper eine Mehrzahl von Rillen, Kühlrippen, Lamellen und/oder Finnen aufweisen. Insbesondere wenn der erste Kühlkörper zumindest einen Teil einer Wand des Gehäuses bildet, können die Rillen, Kühlrippen, Lamellen und/oder Finnen auch auf der Gehäuseaußenseite, also auf der Außenseite der Gehäusewand, angeordnet sein.

Zusätzlich zum ersten Kühlkörper der Flugfeldbeleuchtungseinrichtung kann der erste Grundkörper selbst einen zweiten Kühlkörper aufweisen. Dabei kann der erste Grundkörper auch als zweiter Kühlkörper ausgebildet sein, auf dem die zumindest eine erste LED angeordnet ist. Der zweite Kühlkörper kann die Ableitung von Wärme von der zumindest einen ersten LED zusätzlich zur Wärmeableitung durch das erste Wärmeleitrohr und den ersten Kühlkörper erhöhen. Da der erste Grundkörper und damit auch der zweite Kühlkörper in dem Gehäuse der Flugfeldbeleuchtungseinrichtung angeordnet ist, kann Wärme von der zumindest einen ersten LED über den zweiten Kühlkörper in den Innenraum des Gehäuses abgegeben werden. Dies kann beispielsweise dann vorteilhaft sein, wenn die Umgebungstemperatur, in der die Flugfeldbeleuchtungseinrichtung angeordnet ist, derart niedrig ist, dass das Wärmeübertragungsmedium im ersten Wärmeleitrohr bei Nichtbetrieb der zumindest einen ersten LED gänzlich oder zumindest zu einem so großen Teil ausgefroren ist, dass unmittelbar nach der Inbetriebnahme der zumindest einen ersten LED das Wärmeübertragungsmedium im Wärmeleitrohr nicht oder nicht ausreichend zirkulieren kann, um die von der zumindest einen ersten LED erzeugten Wärme effizient zum ersten Kühlkörper ableiten zu können. Durch den zweiten Kühlkörper kann dann die von der zumindest einen ersten LED erzeugten Wärme in den Innenraum des Gehäuses abgeleitet und damit derart umverteilt werden, dass die Temperatur im Gehäuse und damit auch im ersten Wärmeleitrohr über die Umgebungstemperatur angehoben werden kann, so dass das Wärmeübertragungsmedium im ersten Wärmeleitrohr wieder ausreichend zirkulieren kann. Alternativ oder zusätzlich kann ein Heizelement zur Heizung des ersten Wärmeleitrohrs im Gehäuse angeordnet sein, um das erste Wärmeleitrohr auf eine zur Wärmeableitung erforderliche Betriebstemperatur zu heizen. Beispielsweise kann die Betriebstemperatur durch eine Schmelz- oder Siedetemperatur des Wärmeübertragungsmediums gegeben sein.

Bei der hier beschriebenen Flugfeldbeleuchtungseinrichtung kann es möglich sein, dass die elektrische Leistung der zumindest einen LED nicht aufgrund einer zu vermeidenden Überhitzungsgefahr der LED im Gehäuse beschränkt sein muss. Vielmehr kann es möglich sein, dass die zumindest eine erste LED eine elektrische Leistung von mehr als 20 Watt aufweist. Gerade bei einer derartigen Hochleistungs-LED kann die hier beschriebene Wärmeableitung mittels des ersten Wärmeleitrohrs und des ersten Kühlkörpers die Erzielung einer langen Lebensdauer der Flugfeldbeleuchtungseinrichtung ermöglichen.

Weiterhin kann die zumindest eine erste LED auch ein LED-Array, das bedeutet eine Anordnung einer Mehrzahl von gleichartigen oder verschiedenen LEDs, auf dem ersten Grundkörper umfassen oder sein. Die zumindest eine LED oder die LEDs des LED-Arrays können bevorzugt Licht in einem sichtbaren Wellenlängenbereich abstrahlen und damit beispielsweise einen einfarbigen, mischfarbigen oder weißfarbigen Leuchteindruck bei einem Betrachter erwecken. Merkmale derartiger LEDs und LED-Arrays sind dem Fachmann bekannt und werden hier nicht weiter ausgeführt.

Zusätzlich zur einen ersten LED auf dem ersten Grundkörper weist die Flugfeldbeleuchtungseinrichtung zumindest eine zweite LED auf einem zweiten Grundkörper auf. Weiterhin weist die Flugfeldbeleuchtungseinrichtung ein zweites Wärmeleitrohr auf, das an den zweiten Grundkörper und an den ersten Kühlkörper thermisch gekoppelt ist und das ein Wärmeübertragungsmedium umfasst, das im Betrieb der zumindest einen zweiten LED im zweiten Wärmeleitrohr zirkulieren kann. Dadurch kann die von der zumindest einen zweiten LED erzeugte Wärme vom zweiten Grundkörper zum ersten Kühlkörper abgeleitet werden.

Der zweite Grundkörper kann dabei Merkmale wie im Zusammenhang mit dem ersten Grundkörper beschrieben aufweisen. Das zweite Wärmeleitrohr kann Merkmale wie im Zusammenhang mit dem ersten Wärmeleitrohr beschrieben aufweisen. Die zumindest eine zweite LED kann Merkmale wie im Zusammenhang mit der zumindest einen ersten LED beschrieben aufweisen.

Insbesondere können der erste Grundkörper und der zweite Grundkörper im Gehäuse derart angeordnet sein, dass die zumindest eine erste LED und die zumindest eine zweite LED im Betrieb in dieselbe oder in voneinander verschiedene Richtungen Licht abstrahlen können.

Weitere Vorteile und vorteilhafte Ausführungsformen und Weiterbildungen der Flugfeldbeleuchtungseinrichtung ergeben sich aus den im Folgenden in Verbindung mit den Figuren 1 bis 2B beschriebenen Ausführungsformen.

Es zeigen:
- Figur 1: eine schematische Darstellung einer Flugfeldbeleuchtungseinrichtung
- Figuren 2A und B: schematische Darstellungen einer Flugfeldbeleuchtungseinrichtung gemäß einem Ausführungsbeispiel.

In den Figuren können gleiche oder gleich wirkende Bestandteile jeweils mit den gleichen Bezugszeichen versehen sein. Die dargestellten Elemente und deren Größenverhältnisse untereinander sind grundsätzlich nicht als maßstabsgerecht anzusehen, vielmehr können einzelne Elemente wie zum Beispiel Schichten, Bauteile, Bauelemente und Bereiche zur besseren Darstellbarkeit und/oder zum besseren Verständnis übertrieben dick oder groß dimensioniert dargestellt sein.

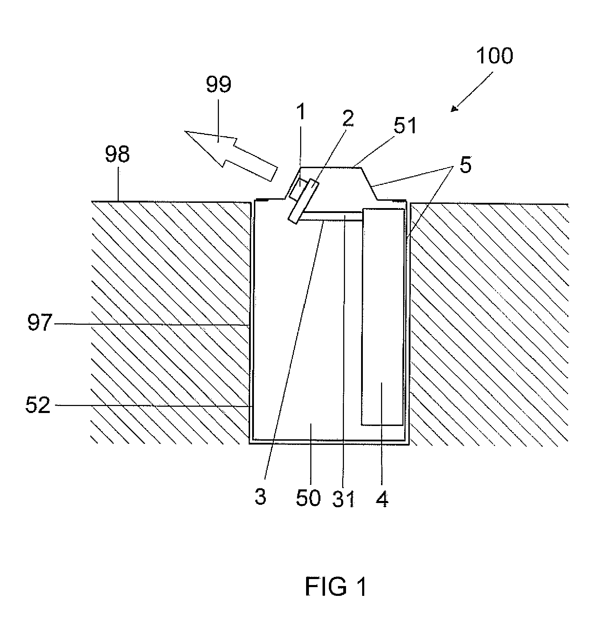

Figur 1 zeigt Flugfeldbeleuchtungseinrichtung 100. Diese ist auf einem Flugfeld 98, also etwa einer Start- oder Landebahn oder einem Rollfeld, in einer Vertiefung 97 angeordnet. Eine Mehrzahl derartiger im Boden versenkter Flugfeldbeleuchtungseinrichtungen 100 kann beispielsweise die Randbegrenzungen oder die Mittellinie des Flugfeldes 98 kennzeichnen.

Die Flugfeldbeleuchtungseinrichtung 100 weist zumindest eine erste LED 1 auf, die Licht in die mit dem Pfeil 99 gekennzeichnete Richtung abstrahlen kann. Die zumindest eine erste LED kann dabei je nach Ausführung des Flugfeldes 98 Licht mit einer amtlich vorgeschriebenen Farbe und Abstrahlcharakteristik abstrahlen. Typischerweise erwecken Flugfeldbeleuchtungseinrichtungen beispielsweise am Rand von Rollbahnen einen blauen und am Rand von Start- und Landebahnen einen weißfarbigen Leuchteindruck. Flugfeldbeleuchtungseinrichtungen für eine Mittellinienmarkierung können beispielsweise auch einen weißfarbigen, eine weiß- und rotfarbigen oder einen rotfarbigen Leuchteindruck je nach Position auf einer Start- oder Landebahn erwecken. Um eine amtlich vorgeschrieben Helligkeit zu erreichen, hat die zumindest eine erste LED 1 eine Leistung von mehr als 20W. Alternativ dazu kann die zumindest eine erste LED 1 auch als LED-Array ausgebildet sein, also als Mehrzahl von LEDs, die zusammen die erforderliche Abstrahlcharakteristik und Helligkeit aufweisen.

Die zumindest eine erste LED 1 ist auf einem ersten Grundkörper 2 angeordnet, der als mechanischer Träger dient und elektrische Zuleitungen für den elektrischen Anschluss der zumindest einen ersten LED 1 aufweist. Im gezeigten Ausführungsbeispiel ist der erste Grundkörper 2 als Aluminiumkernplatine ausgeführt, die in thermischem Kontakt mit der zumindest einen ersten LED 1 steht.

Ein erstes Wärmeleitrohr 3 mit einem Wärmeübertragungsmedium 31 in einem Innenvolumen des ersten Wärmeleitrohrs 3 ist in thermischem Kontakt zum ersten Grundkörper 2 und zu einem ersten Kühlkörper 4. Das Wärmeleitrohr 3 ist dabei so ausgebildet, dass das Wärmeübertragungsmedium 31 in seinem Innenvolumen zirkulieren kann und Wärme, die im Betrieb der zumindest einen ersten LED 1 entsteht, zum ersten Kühlkörper 4 ableiten kann.

Weiterhin umfasst die Flugfeldbeleuchtungseinrichtung 100 eine Gehäuse 5, das im gezeigten Ausführungsbeispiel einen Deckel 51 und ein Unterteil 52 aufweist, die ein Gehäuseinnenvolumen 50 einschließen. Die zumindest eine erste LED 1 auf dem ersten Grundkörper 2 und das erste Wärmeleitrohr 3 sind innerhalb des Gehäuses 5 angeordnet. Der erste Kühlkörper 4 ist so ausgebildet, dass Wärme, die von der zumindest einen ersten LED 1 mittels des ersten Wärmeleitrohrs 3 auf den ersten Kühlkörper 4 abgeleitet wird, an die Umgebung, also im gezeigten Ausführungsbeispiel an die Vertiefung 97 des Flugfelds 98 abgegeben werden kann. Dazu steht der erste Kühlkörper 4 mit der Wandung des Unterteils 52 des Gehäuses 5 in thermischem Kontakt.

Zusätzlich kann im Gehäuseinnenvolumen 50 noch ein Heizelement angebracht sein (nicht gezeigt), das geeignet ist, das erste Wärmeleitrohr 2 auf eine zur Wärmeableitung erforderliche Betriebstemperatur wie oben im allgemeinen Teil beschrieben aufzuheizen.

Weitere optische, elektrische und mechanische Bauteile wie etwa Fenster im Deckel 51, Linsen, elektrische Leitungen und Bauelemente oder mechanische Haltevorrichtungen für die einzelnen hier beschriebenen Bauteile sind der Übersicht halber nicht gezeigt. Diese können jedoch im Gehäuseinnenvolumen 50 zusätzlich angeordnet sein. Weiterhin können beispielsweise in der Vertiefung 97 außerhalb des Gehäuses 50 elektrische Zuleitungen und/oder Bauelemente wie etwa Transistoren angeordnet sein und über geeignete Steckverbindungen und/oder Durchführungen in die Flugfeldbeleuchtungseinrichtung 100 geführt werden (nicht gezeigt).

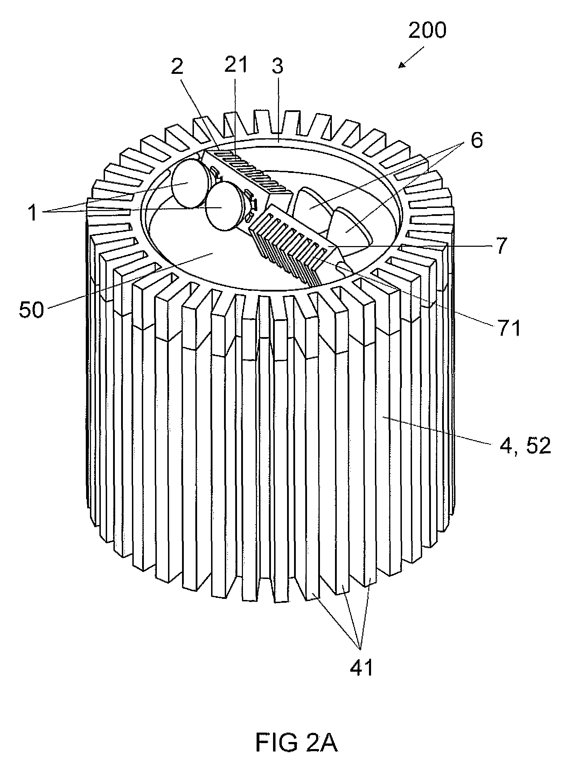

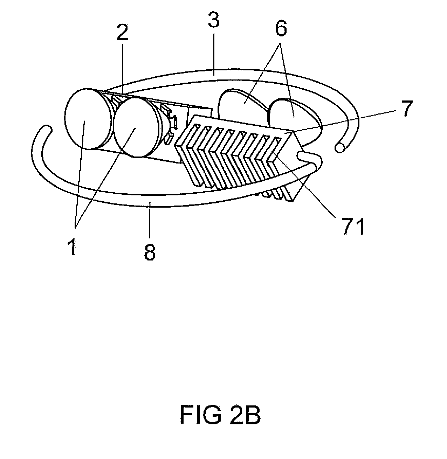

In den Figuren 2A und 2B ist in einer schematischen dreidimensionalen Darstellung ein Ausführungsbeispiel 200 für eine Flugfeldbeleuchtungseinrichtung gezeigt, wobei in Figur 2A im Vergleich zur Flugfeldbeleuchtungseinrichtung 100 der Figur 1 nur die Unterseite 52 des Gehäuses 5 gezeigt ist, während der Deckel 51 der Ubersichtlichkeit halber in dieser Darstellung weggelassen wurde. Figur 2B zeigt im Vergleich zur Figur 2A zum besseren Verständnis lediglich die in Figur 2A innerhalb des Gehäuses 5 angeordneten Bauelemente. Die folgende Beschreibung bezieht sich gleichermaßen auf beide Figuren 2A und 2B.

Die Flugfeldbeleuchtungseinrichtung 200 weist einen Kühlkörper 4 auf, der als Teil der Unterseite 52 des Gehäuses ausgebildet ist. Der Kühlkörper 4 weist eine zylindrische Form auf und umschließt dabei ein Gehäuseinnenvolumen 50. in dem eine Mehrzahl von ersten LEDs 1 auf einem ersten Grundkörper 2 und eine Mehrzahl von zweiten LEDs 6 auf einem zweiten Grundkörper 7 angeordnet sind. Die Mehrzahl erster LEDs 1 und die Mehrzahl zweiter LEDs 6, von denen jeweils rein beispielhaft zwei LEDs mit jeweils einem optischen Element zur Strahlformung gezeigt sind, sind dabei so angeordnet, dass sie unabhängig in voneinander verschiedene Richtungen Licht abstrahlen.

Der erste Grundkörper 2 und der zweite Grundkörper 7 sind jeweils als zweiter Kühlkörper mit Kühllamellen 21 bzw. 71 ausgebildet, wodurch die von den LEDs 1 bzw. LEDs 6 im Betrieb entstehende Wärme zumindest teilweise wie oben im allgemeinen Teil beschrieben in das Gehäuseinnenvolumen 50 abgeleitet werden kann.

Mit dem ersten Grundkörper 2 ist ein erstes Wärmeleitrohr 3 thermisch verbunden, wobei ein Ende des ersten Wärmeleitrohrs 3 in eine Öffnung im ersten Grundkörper gesteckt ist und das erste Wärmeleitrohr 3 vom ersten Grundkörper 2 weg in gekrümmter Form zum ersten Kühlkörper 4 hin verläuft. Das erste Wärmeleitrohr 3 weist dazu eine spiralenähnliche Form auf, die an die Form der dem ersten und zweiten Grundkörper 2, 7 zugewandten Innenseite des ersten Kühlkörpers 4 angepasst ist. Dabei ist das erste Wärmeleitrohr 3 umlaufend um den ersten Grundkörper 2 entlang einer Innenfläche des ersten Kühlkörpers 4 angeordnet. Der erste Kühlkörper 4 weist zusätzlich eine Rinne auf, in der das erste Wärmeleitrohr 3 entlang des etwa halben Innenumfangs des ersten Kühlkörpers 4 angeordnet ist. Dadurch entsteht ein großflächiger thermischer Kontakt zwischen dem ersten Wärmeleitrohr 3 und dem ersten Kühlkörper 4.

Ein zweites Wärmeleitrohr 8 ist mit dem zweiten Grundkörper 7 thermisch verbunden, wobei eine Ende des zweiten Wärmeleitrohrs 8 in eine Öffnung des zweiten Grundkörpers 7 gesteckt ist und das zweite Wärmeleitrohr 8 wie das erste Wärmeleitrohr 3 eine spiralenähnliche Form aufweist und ebenfalls in einer Rinne im ersten Kühlkörper 4 angeordnet ist. Das erste Wärmeleitrohr 3 verläuft somit entlang der Innenfläche des ersten Kühlkörpers 4 zum zweiten Grundkörper 7 hin, während das zweite Wärmeleitrohr 8 entlang der Innenfläche des ersten Kühlkörpers 4 zum ersten Grundkörper 2 hin verläuft. Wie insbesondere aus Figur 2B ersichtlich ist, ist dadurch eine äußerst kompakte Anordnung des ersten und zweiten Grundkörpers 2, 7 und der ersten und zweiten Wärmeleitrohre 3, 8 im Gehäuseinnenvolumen 50 bei gleichzeitigem jeweils großflächigem thermischen Kontakt zwischen den Wärmeleitrohren 3, 8 und dem ersten Kühlkörper 4 möglich.

Die Wärmeleitrohre 2, 7 sind im gezeigten Ausführungsbeispiel wie weiter oben beschriebene Heatpipes, die auf Höhe der LEDs 1, 6 oder alternativ darunter angeordnet sind. In einem eingebauten Zustand der Flugfeldbeleuchtungseinrichtung 200, wie etwa in Figur 1 gezeigt, verlaufen die Wärmeleitrohre 3, 8 entlang des ersten Kühlkörpers 4 in horizontaler Richtung. Dabei ist "horizontal" in Relation zur Schwerkraftrichtung in einem eingebauten Zustand der Flugfeldbeleuchtungseinrichtung 200 definiert. Das bedeutet, dass die Einbauorientierung der Flugfeldbeleuchtungseinrichtung 200 im gezeigten Ausführungsbeispiel derart ist, dass die Zylinderachse des ersten Kühlkörpers 4 in eingebautem Zustand parallel zur Schwerkraftrichtung ist.

Der Kühlkörper weist auf der dem ersten und zweiten Grundkörper 2, 7 abgewandten Außenfläche, also an der Gehäuseaußenseite, umlaufend um die Grundkörper 2, 7 eine Mehrzahl von Kühlrippen 41 auf. Dadurch ist eine großflächige thermische Ankopplung des ersten Kühlkörpers 4 und damit des Gehäuses der Flugfeldbeleuchtungseinrichtung 200 an die

## Patentansprüche

1. Flugfeldbeleuchtungseinrichtung, umfassend:
- zumindest eine erste lichtemittierende Diode (LED) (1) auf einem ersten Grundkörper (2),
- ein erstes Wärmeleitrohr (3) mit einem Wärmeübertragungsmedium (31),
- einen ersten Kühlkörper (4), und
- ein Gehäuse (5), in dem der erste Grundkörper (2) und das erste Wärmeleitrohr (3) angeordnet sind,
- das erste Wärmeleitrohr (3) an den ersten Grundkörper (2) und an den ersten Kühlkörper (4) thermisch angekoppelt ist und
- das Wärmeübertragungsmedium (31) im ersten Wärmeleitrohr (3) zirkulieren kann, so dass von der zumindest einen ersten LED (1) im Betrieb erzeugte Wärme vom ersten Grundkörper (2) zum ersten Kühlkörper (4) abgeleitet werden kann,
wobei
- das erste Wärmeleitrohr (3) umlaufend um den ersten Grundkörper (2) entlang einer Innenfläche des ersten Kühlkörpers (4) angeordnet ist,
**gekennzeichnet durch**:
- zumindest eine zweite lichtemittierende Diode (LED) (6) auf einem zweiten Grundkörper (7),
- ein zweites Wärmeleitrohr (8) mit einem Wärmeübertragungsmedium,
wobei
- das zweite Wärmeleitrohr (8) an den zweiten Grundkörper (7) und an den ersten Kühlkörper (4) thermisch angekoppelt ist und
- das zweite Wärmeübertragungsmedium im Betrieb der zumindest einen zweiten LED (6) im zweiten Wärmeleitrohr (8) zirkulieren kann, so dass von der zumindest einen zweiten LED (6) erzeugte Wärme vom zweiten Grundkörper (7) zum ersten Kühlkörper (4) abgeleitet werden kann,
wobei
- der erste Kühlkörper (4) den ersten und zweiten Grundkörper (2, 7) zylinderförmig umgibt,
wobei
- das erste Wärmeleitrohr (3) in gebogener Form entlang einer dem ersten und zweiten Grundkörper (2, 7) zugewandten Innenfläche des ersten Kühlkörpers (4) zum zweiten Grundkörper (7) verläuft und
- das zweite Wärmeleitrohr (8) in gebogener Form entlang der Innenseite des ersten Kühlkörpers (4) zum ersten Grundkörper (2) verläuft.

2. Flugfeldbeleuchtungseinrichtung nach Anspruch 1, wobei
der erste Kühlkörper (4) zumindest Teil eines Gehäuses (5) ist, in dem der erste Grundkörper (2) mit der zumindest einen ersten LED (1) angeordnet ist.

3. Flugfeldbeleuchtungseinrichtung nach einem der vorherigen Ansprüche, wobei
der erste Kühlkörper (4) auf einer dem ersten Grundkörper (2) abgewandten Außenfläche umlaufend um den ersten Grundkörper (2) eine Mehrzahl von Kühlrippen (41) aufweist.

4. Flugfeldbeleuchtungseinrichtung nach einem der vorherigen Ansprüche, wobei
der erste Grundkörper (2) einen zweiten Kühlkörper umfasst.

5. Flugfeldbeleuchtungseinrichtung nach einem der vorherigen Ansprüche, wobei
das erste Wärmeleitrohr (3) in eine Öffnung im ersten Grundkörper (2) gesteckt ist.

6. Flugfeldbeleuchtungseinrichtung nach einem der vorherigen Ansprüche, wobei
- die Flugfeldbeleuchtungseinrichtung eine für den Betrieb erforderliche Einbauorientierung in Relation zur Schwerkraftrichtung aufweist und
- das erste Wärmeleitrohr (3) in einem derart eingebauten Zustand der Flugfeldbeleuchtungseinrichtung horizontal vom ersten Grundkörper (2) zum ersten Kühlkörper (4) führt.

7. Flugfeldbeleuchtungseinrichtung nach einem der vorherigen Ansprüche, wobei
das erste Wärmeleitrohr (3) weg vom ersten Grundkörper (2) in gekrümmter Form zum ersten Kühlkörper (4) verläuft.

8. Flugfeldbeleuchtungseinrichtung nach einem der vorherigen Ansprüche, wobei
die zumindest eine erste LED (1) eine elektrische Leistung von mehr als 20 Watt aufweist.

9. Flugfeldbeleuchtungseinrichtung nach dem vorherigen Anspruch, wobei
die zumindest eine erste LED (1) und die zumindest eine zweite LED (6) im Betrieb in voneinander verschiedene Richtungen Licht abstrahlen.

10. Flugfeldbeleuchtungseinrichtung nach einem der vorherigen Ansprüche, weiterhin umfassend
- ein Heizelement zur Heizung des ersten Wärmeleitrohrs (3) auf eine zur Wärmeableitung erforderliche Betriebstemperatur.

## Claims

1. Airfield lighting device, having:
- at least one first light-emitting diode (LED) (1) on a first base body (2),
- a first thermally conductive tube (3) with a heat transmission medium (31),
- a first heat sink (4), and
- a housing (5), in which the first base body (2) and the first thermally conductive tube (3) are arranged,
- the first thermally conductive tube (3) is thermally coupled to the first base body (2) and to the first heat sink (4), and
- the heat transmission medium (31) can circulate in the first thermally conductive tube (3), such that heat which is produced by the at least one first LED (1) during operation can be dissipated from the first base body (2) to the first heat sink (4),
wherein
- the first thermally conductive tube (3) is arranged circumferentially around the first base body (2), along an inner surface of the first heat sink (4),
- at least one second light-emitting diode (LED) (6) on a second base body (7),
- a second thermally conductive tube (8) with a heat transmission medium,
wherein
- the second thermally conductive tube (8) is thermally coupled to the second base body (7) and to the first heat sink (4), and
- the second heat transmission medium can circulate in the second thermally conductive tube (8) during operation of the at least one second LED (6), such that heat which is produced by the at least one second LED (6) during operation can be dissipated from the second base body (7) to the first heat sink (4),
wherein
- the first heat sink (4) cylindrically surrounds the first and second base bodies (2, 7).
wherein
- the first thermally conductive tube (3) runs in a curved shape along an inner surface, which faces the first and the second base bodies (2, 7), of the first heat sink (4) to the second base body (7), and
- the second thermally conductive tube (8) runs in a curved shape along the inner face of the first heat sink (4) to the first base body (2).

2. Airfield lighting device according to Claim 1,
wherein the first heat sink (4) is at least part of a housing (5) in which the first base body (2) with the at least one first LED (1) is arranged.

3. Airfield lighting device according to one of the preceding claims, wherein
the first heat sink (4) has a plurality of cooling ribs (41), circumferentially around the first base body (2), on an outer surface facing away from the first base body (2).

4. Airfield lighting device according to one of the preceding claims, wherein
the first base body (2) comprises a second heat sink.

5. Airfield lighting device according to one of the preceding claims, wherein
the first thermally conductive tube (3) is plugged into an opening in the first base body (2).

6. Airfield lighting device according to one of the preceding claims, wherein
- the airfield lighting device has an installation orientation, which is required for operation, in relation to the force of gravity direction, and
- the first thermally conductive tube (3), when the airfield lighting device is installed in this way, leads horizontally from the first base body (2) to the first heat sink (4).

7. Airfield lighting device according to one of the preceding claims, wherein
the first thermally conductive tube (3) leads away from the first base body (2) in a curved shape to the first heat sink (4).

8. Airfield lighting device according to one of the preceding claims, wherein
the at least one first LED (1) has an electrical power of more than 20 watts.

9. Airfield lighting device according to the preceding claim, wherein
the at least one first LED (1) and the at least one second LED (6) emit light in mutually different directions during operation.

10. Airfield lighting device according to one of the preceding claims, further comprising
- a heating element for heating the first thermally conductive tube (3) to an operating temperature which is required for heat dissipation.

## Revendications

1. Dispositif d'éclairage de terrain d'aviation, comprenant :
- au moins une première diode électroluminescente (DEL) (1) sur un premier corps de base (2),
- un premier tube caloporteur (3) contenant un fluide caloporteur (31),
- un premier corps de refroidissement (4) et
- un boîtier (5) dans lequel sont agencés le premier corps de base (2) et le premier tube caloporteur (3),
- le premier tube caloporteur (3) étant couplé thermiquement au premier corps de base (2) et au premier corps de refroidissement (4) et
- le fluide caloporteur (31) pouvant circuler dans le premier tube caloporteur (3), de sorte que de la chaleur produite par la au moins une première DEL (1) pendant le fonctionnement peut être dissipée du premier corps de base (2) vers le premier corps de refroidissement (4),
- le premier tube caloporteur (3) étant agencé tout autour du premier corps de base (2) le long d'une face intérieure du premier corps de refroidissement (4),
**caractérisé par** :
- au moins une deuxième diode électroluminescente (DEL) (6) sur un deuxième corps de base (7),
- un deuxième tube caloporteur (8) contenant un fluide caloporteur,
- le deuxième tube caloporteur (8) étant couplé thermiquement au deuxième corps de base (7) et au premier corps de refroidissement (4) et
- le deuxième fluide caloporteur pouvant circuler dans le deuxième tube caloporteur (8) pendant le fonctionnement de la au moins une deuxième DEL (6), de sorte que de la chaleur produite par la au moins une deuxième DEL (6) peut être dissipée du deuxième corps de base (7) vers le premier corps de refroidissement (4),
- le premier corps de refroidissement (4) entourant cylindriquement les premier et deuxième corps de base (2, 7),
- le premier tube caloporteur (3) longeant, en forme incurvée et en direction du deuxième corps de base (7), une face intérieure du premier corps de refroidissement (4) tournée vers les premier et deuxième corps de base (2, 7) et
- le deuxième tube caloporteur (8) longeant, en forme incurvée et en direction du premier corps de base (2), la face intérieure du premier corps de refroidissement (4).

2. Dispositif d'éclairage de terrain d'aviation selon la revendication 1, le premier corps de refroidissement (4) étant au moins une partie d'un boîtier (5) dans lequel est situé le premier corps de base (2) qui comporte la au moins une première DEL (1).

3. Dispositif d'éclairage de terrain d'aviation selon l'une des revendications précédentes, le premier corps de refroidissement (4) comportant, tout autour du premier corps de base (2), une pluralité d'ailettes de refroidissement (41) sur une face extérieure opposée au premier corps de base (2).

4. Dispositif d'éclairage de terrain d'aviation selon l'une des revendications précédentes, le premier corps de base (2) comprenant un deuxième corps de refroidissement.

5. Dispositif d'éclairage de terrain d'aviation selon l'une des revendications précédentes, le premier tube caloporteur (3) étant emboîté dans une ouverture ménagée dans le premier corps de base (2).

6. Dispositif d'éclairage de terrain d'aviation selon l'une des revendications précédentes,
- le dispositif d'éclairage de terrain d'aviation présentant une orientation de montage, requise pour le fonctionnement, en relation avec le sens de la gravité et
- le premier tube caloporteur (3) allant, lorsque le dispositif d'éclairage de terrain d'aviation est ainsi monté, horizontalement du premier corps de base (2) au premier corps de refroidissement (4).

7. Dispositif d'éclairage de terrain d'aviation selon l'une des revendications précédentes, le premier tube caloporteur (3) allant s'éloignant, en forme courbée, du premier corps de base (2) vers le premier corps de refroidissement (4).

8. Dispositif d'éclairage de terrain d'aviation selon l'une des revendications précédentes, la au moins une première DEL (1) ayant une puissance électrique supérieure à 20 watts.

9. Dispositif d'éclairage de terrain d'aviation selon l'une des revendications précédentes, la au moins une première DEL (1) et la au moins une deuxième DEL (6) émettant, pendant le fonctionnement, de la lumière dans des directions différentes l'une de l'autre.

10. Dispositif d'éclairage de terrain d'aviation selon l'une des revendications précédentes, comprenant en outre un élément chauffant pour porter le premier tube caloporteur (3) à une température de service requise pour la dissipation de chaleur.
